# EUROPÄISCHE PATENTSCHRIFT

(11) **EP 1 033 578 B1**
(45) Veröffentlichungstag und Bekanntmachung des Hinweises auf die Patenterteilung: **06.04.2005**
(21) Anmeldenummer: 00102683.0
(22) Anmeldetag: 09.02.2000
(51) Int. Cl.: G01P 3/483, G01D 5/241, G01P 13/04, G01F 15/06

(54) **Anordnung zum Detektieren einer Rotation eines Drehelements**
Device for determining the rotation of a rotating element
Dispositif de détermination de la rotation d'un élément rotatif

(30) Priorität: 27.02.1999 DE 19908612
(43) Veröffentlichungstag der Anmeldung: 06.09.2000
(73) Patentinhaber: Ziegler, Horst Prof. Dr., D-33100 Paderborn (DE)
(72) Erfinder: Ziegler, Horst, Prof. Dr., 33100 Paderborn (DE); Ziegler, Martin Andreas, Dipl.-Phys., Dipl.-Math., 33100 Paderborn (DE); Ziegler, Ulrike Claudia, Dipl.-Ing., 71063 Sindelfingen (DE); Ziegler, Tobias Irmo, 33100 Paderborn (DE); Hermisch, Wilhelm, 33102 Paderborn (DE)
(74) Vertreter: LINDNER BLAUMEIER & KOLLEGEN Patent- und Rechtsanwälte

(56) Entgegenhaltungen:
- EP-A- 0 397 335
- EP-A- 0 701 109
- DE-A- 1 774 578
- DE-A- 2 748 425
- DE-A- 3 340 508
- DE-A- 3 711 062
- US-A- 3 766 544
- US-A- 4 391 144
- US-A- 4 488 152
- US-A- 4 556 864
- US-A- 4 779 094
- US-A- 4 843 387
- US-A- 4 924 407
- US-A- 5 077 635
- FABIAN T ET AL: "A ROBUST CAPACITIVE ANGULAR SPEED SENSOR" , INSTRUMENTATION AND MEASUREMENT TECHNOLOGY CONFERENCE PROCEEDINGS. (IMTC),US,NEW YORK, IEEE, VOL. CONF. 14, PAGE(S) 1267-1272 XP000730879ISBN: 0-7803-3748-4 * das ganze Dokument *

## Beschreibung

Die Erfindung betrifft eine Anordnung zum Detektieren einer Rotation eines Drehelements.

In der Verbrauchsmesstechnik besteht oft die Aufgabe, bei einem mechanischen Volumenmesser wie z.B. einem Wasserzähler die Drehbewegung eines mit verbrauchsproportionaler Drehzahl rotierenden Drehteils, also eines Primärgebers elektronisch abzutasten. Anschießend kann sie dann elektronisch bewertet, akkumuliert und der akkumulierte Verbrauch über ein optisches oder elektronisches Kommunikationssystem zur Abrechnung, Kontrolle oder Steuerung übertragen werden. Oft wird die originäre Drehbewegung des Drehteils, z.B. eines Flügelrades, zusätzlich noch mechanisch untersetzt. Diese Untersetzung soll einerseits zu dekadischen Anzeigeeinheiten führen, wenn der Volumenmesser zusätzlich mit einem konventionellen mechanischen Zählwerk mit Anzeige ausgestattet ist. Andererseits kann sie vorteilhaft sein, die zeitlichen Anforderungen an das Abtastsystem oder seine elektronische Verarbeitung zu verringern. Zum Abtasten kommt eine spezielle Anordnung zum Detektieren einer Rotation eines Drehelements zum Einsatz. Eine solche Anordnung benötigt ein möglichst kleines, einfaches und preisgünstiges Geberelement, z.B. in Form einer kreisrunden Geberscheibe, bei der sich bestimmte Winkelbereiche (meist 180°) durch einen abzutastenden physikalischen Parameter (z.B. schwarz-weiß, Nordpol-Südpol, leitend-nichtleitend und ähnliches) unterscheiden. Ferner wird eine Komponente zum Erfassen dieser physikalischen Eigenschaften benötigt. Die Anordnung selbst soll aber durch elektrische und magnetische Gleich- und Wechselfelder sowie durch Gleich- und Wechsellicht, Temperatur und andere externe Parameter sowie durch Feuchtigkeit und Schmutz nicht beeinflussbar sein, da beispielsweise im Falle eines Volumenmessers sonst die Gefahr besteht, dass die Verbraucher absichtlich oder unabsichtlich das Abtastsystem durch solche Parameter beeinflussen und eine Verbrauchsakkumulation des elektronischen Umdrehungszählers manipulieren oder verhindern. Da die Drehzahl des Drehteils im Falle eines Volumenmessers sich auch sehr schnell zwischen jahrelangem Stillstand und einer Höchstdrehzahl verändern kann, muss der gesamte Drehzahlbereich und seine Änderungsgeschwindigkeit sicher überdeckt werden. Weiterhin soll der Stromverbrauch für die Detektionsanordnung möglichst gering sein und einen Batteriebetrieb über mindestens eine Eichperiode (derzeit 5-12 Jahre) ermöglichen. Deswegen ist für eine Detektionsanordnung ein Maximalstrombedarf im Bereich von 1 *µ*A anzustreben. Ferner soll die Bauhöhe der Detektionsanordnung möglichst gering sein, um auch den Einbau eines solchen Zählers trotz der zusätzlichen Abtastung in den oft beengten Zählerschächten zu ermöglichen. Schließlich soll die Detektionsanordnung möglichst auch durch die Wandung eines geschlossenen Kunststoffgehäuses hindurch funktionieren. Das ermöglicht die Abtastung konventioneller mechanischer Zählwerke durch ein von außen auch später aufsetzbares und auswechselbares Detektionssystem.

Der Stand der Technik wird wesentlich durch magnetische Detektionsverfahren bestimmt. Ihre Nachteile sind die Beeinflussbarkeit durch externe Magneten, Kosten und Gewicht der Gebermagnete sowie Temperaturabhängigkeit, schließlich die Kosten und der Stromverbrauch der feldabtastenden Elemente (Reed-Schalter oder Halbleitersensoren). Die alternative Standardmethode sind magnetische Wechselfelder. Meist beeinflusst dabei eine leitende Geberscheibenhälfte Güte und/oder Frequenz eines elektrischen Schwingkreises. Nachteilig jedoch sind die Kosten und vor allem die Bauhöhe der Magnetfeldspulen, die dabei zugleich als Schwingkreiselemente und als Sensoren dienen. Ferner nachteilig sind die Kosten und der Strombedarf der Auswertelektronik sowie die Beeinflussbarkeit durch externe statische Magnetfelder über die magnetische Sättigung des Ferritmaterials der Spulen sowie Temperatureinfluss und Fertigungstoleranzen der Schwingkreisbauelemente. Weiterhin erfordert das Verfahren einen eng begrenzten Flächenwiderstandsbereich der Geberscheibe und erlaubt dementsprechend nur bestimmte Fertigungsverfahren hierfür. Darüber hinaus sinkt der Mess-Effekt sehr stark bei wachsendem Abstand der Geberscheibe.

Aus DE-A-37 11 062 A1 ist eine kapazitiv arbeitende Anordnung bekannt, die eine Positions- und Drehwinkelmessung zulässt. Dies erfolgt auf Basis einer echten Spannungsmessung unter Verwendung von A/D- oder D/A-Wandtern und einer Auswertung der erfassten Ist-Spannungswerte in Bezug auf entsprechende Referenz-Spannungswerte.

Aus US 4,488,152 ist eine weitere kapazitiv arbeitende Einrichtung zur Erfassung von Drehbewegungen bekannt, bei der eine Anregungselektrode mit einem Anregungsspannungspuls und eine Kompensationselektrode mit einem invertierten Spannungspuls beaufschlagt wird. Die Ausgestaltung ist dabei derart, dass sich die geometrische Anordnung der Anregungselektrode zur Kompensationselektrode von Elektrodenpaar zu Elektrodenpaar ändert, so dass je nach abgegriffenem Elektrodenpaar die Ansteuerungsweise kontinuierlich variiert.

Der Erfindung liegt damit das Problem zugrunde, eine Anordnung zum Detektieren einer Rotation eines Drehelements anzugeben, die ein sicheres Erfassen der Rotation bei gleichzeitiger Einfachheit im Aufbau ermöglicht.

Zur Lösung dieses Problems ist eine Anordnung zum Detektieren einer Rotation eines Drehelements mit den Merkmalen des Patentanspruchs 1 vorgesehen.

Bei der erfindungsgemäßen Anordnung wird die sich bei einer Rotation des Drehelements ergebende kapazitive Kopplung der feststehenden Anregungs- und der Empfängerelektrode über die elektrisch leitende Teilfläche ausgenutzt. Wird wenn sich die Teilfläche und die Elektroden zumindest teilweise rotationsbedingt gegenüberstehen die Anregungselektrode mit einem bevorzugt rechteckigen Spannungsimpuls mit positiver oder negativer Flanke angesteuert, so reicht ein einziger Rechteckimpuls aus, dass bedingt durch die kapazitive Kopplung an der Empfängerelektrode ein entsprechendes Empfängersignal abgreifbar ist. Dieses ist nur dann abgreifbar, wenn eine kapazitive Kopplung vorliegt, was nur dann der Fall ist, wenn das Drehelement die Elektroden zumindest teilweise überdeckt. Da es sich hier um ein kapazitives Messverfahren handelt, ist es durch beliebige externe Magnetfelder und externes Licht nicht beeinflussbar. Weiterhin ist, da die erforderlichen Elektroden bzw. die Teilfläche in Form sehr dünner metallischer Schichten ausgebildet werden können, die Bauhöhe extrem gering, Gleiches gilt hinsichtlich der diesbezüglichen Kosten. Auch die Erzeugung der erforderlichen Anregungsimpulse in der Regel in Form von 3 Volt-Rechteckimpulsen sowie auch der Nachweis der im mV-Bereich liegenden Empfängersignale ist durch einfache Schaltungstechnik möglich. Die erfindungsgemäße Anordnung stellt folglich ein einfach aufgebautes Abtastsystem dar, das überall dort zum Einsatz kommen kann, wo die Rotation eines sich drehenden Teils zu erfassen ist, beispielsweise bei einem Volumenmesser.

Um unabhängig von der Umdrehungsfrequenz des Drehelements eine volle Umdrehung desselben sicher erfassen zu können hat es sich als vorteilhaft erwiesen, wenn die Frequenz der Spannungspulse, mit welcher die Anregungselektrode über die Detektionsmittel beaufschlagt wird, im Falle einer Detektion ohne Drehrichtungserkennung wenigstens der doppelten, vorzugsweise der vierfachen maximalen Umdrehungsfrequenz des Drehelements entspricht. Im Falle einer Detektion mit Drehrichtungserkennung sollte die Pulsfrequenz wenigstens dem vierfachen, insbesondere dem sechs- bis achtfachen der maximalen Umdrehungsfrequenz entsprechen.

Es ist lediglich eine zentrale Empfängerelektrode und vier um jeweils 90° versetzt symmetrisch um die Empfängerelektrode angeordnete Anregungselektroden vorgesehen, die zeitversetzt mit Spannungspulsen beaufschlagbar sind. Die Empfängerelektrode sollte bevorzugt kreisförmig sein, jedoch sind auch andere Geometrien denkbar. Wichtig ist die symmetrische Anordnung der vier Anregungselektroden bezüglich der Empfängerelektrode. Die Anregungselektroden selbst können als sich um einen Winkel zwischen 45 - 90° erstreckende Kreissegmente ausgebildet sein, wobei auch hier unterschiedliche Geometrien denkbar sind, solange einerseits die Symmetriebedingung gegeben ist, zum anderen eine hinreichende Elektrodenfläche realisiert ist. Bevorzugt sollten sich die Elektroden um volle 90° um die zentrale Empfängerelektrode erstrecken. Die Empfängerelektrode selbst sollte derart bemessen sein, dass sie das 0,4 - 0,8-fache des Durchmessers der halbkreisförmig ausgebildeten Teilfläche beträgt, so dass eine hinreichende Ankopplung möglich ist. Die Teilfläche selbst sollte dabei derart bemessen sein, dass zwei benachbarte Anregungselektroden vollständig überdeckbar sind. Zweckmäßig ist es ferner, wenn an der vorzugsweise halbkreisförmigen Teilfläche eine an der geradlinigen Flächenkante abstehende weitere Teilfläche angeordnet ist, welche die zentrale Empfängerelektrode zumindest teilweise überdeckt. Die Größe dieser Teilfläche, die zweckmäßigerweise von ihrer Form her der Form der Empfängerelektrode angepasst ist, sollte derart sein, dass ihr Durchmesser dem der Empfängerelektrode entspricht. Ist beispielsweise die Empfängerelektrode kreisförmig ausgebildet, so stellt die weitere Teilfläche einen Halbkreis dar. Da die eine Hälfte der Empfängerelektrode durch die erste, große Teilfläche überdeckt ist, die andere von der zweiten Teilfläche, ist folglich eine vollständige Überdeckung der Empfängerelektrode realisiert.

Auch ohne Kopplung durch die elektrisch leitende Teilfläche auf dem Drehelement ist eine gewisse störende direkte kapazitive Kopplung zwischen Anregungs- und Empfängerelektrode unvermeidlich. Dadurch ändert sich das Empfängersignal bei einer kleinbemessenen Teilfläche und relativ großem Abstand zwischen dieser und den Elektroden nur wenig gegenüber diesem Grundwert. Um das eigentliche Empfängersignal zu erfassen wären eine entsprechend aufwendige Signalverstärkung und -verarbeitung erforderlich. Um dem zu begegnen ist erfindungsgemäß vorgesehen sein, dass am Sensorelement der oder jeder Empfängerelektrode eine Kompensationselektrode zugeordnet ist, die benachbart zur Empfängerelektrode angeordnet ist und seitens der Detektionsmittel mit zu den Spannungspulsen, die der oder den Anregungselektroden gegeben werden, invertierten Spannungspulsen beaufschlagbar ist. Bedingt durch die Beaufschlagung mit dem logisch invertierten Signal bzw. der invertierten Flanken wird quasi eine Kompensationskapazität bzw. ein Kompensationssignal erzeugt, welches die direkte Koppelkapazität zwischen Anregungs- und Empfängerelektrode weitgehend ausgleicht. Damit wird mit besonderem Vorteil der sich negativ auswirkende Koppelkapazitäts-Grundwert, der das Empfängersignal beeinflusst, reduziert, so dass das eigentliche Empfängersignal deutlicher und einfacher detektierbar ist. Dabei sollte die aus der Kompensationselektrode und der Empfängerelektrode gebildete Kapazität im wesentlichen gleich der oder größer als die aus der Empfängerelektrode und einer benachbarten Anregungselektrode gebildete Kapazität sein. Im Falle einer gleichen Kapazität ergibt sich stets (ohne dass die leitende Teilfläche gegenübersteht) ein Netto-Empfängersignal von "Null", da sich die kapazitätsbedingten Signale kompensieren. Daher kann das Empfängersignal unkritisch detektiert werden, da ein Netto-Empfängersignal nur durch die Kopplung über die leitende Teilfläche am Drehelement entsteht. Jedoch kann die Kompensationskapazität auch etwas größer gemacht werden als die eigentliche Koppelkapazität, so dass eine negative Vorspannung erzielt wird, um damit für beliebige Spannungen größer Null auch bei einem Detektormittel mit undefinierter Verstärkung eine gewisse Mindest-Schaltschwelle vorzugeben.

Ist die erfindungsgemäße Anordnung derart realisiert, dass eine zentrale Empfängerelektrode und vier symmetrisch dazu angeordnete Anregungselektroden vorgesehen sind, so hat es sich als besonders zweckmäßig erwiesen, wenn zu jeder der vier symmetrisch angeordneten Anregungselektroden stets die der mit dem anregenden Spannungspuls zu beaufschlagenden Anregungselektrode gegenüberliegende Anregungselektrode die Kompensationselektrode bildet, die mit dem invertierten Spannungspuls zeitgleich beaufschlagbar ist. Hier bilden also jeweils zwei gegenüberliegende Anregungselektroden ein Elektrodenpaar, bei dem jeweils eine als "echte" Anregungselektrode fungiert, die andere dient als Kompensationselektrode, die mit dem invertierten Spannungspuls beaufschlagt wird, sie wird also mit Spannungsflanken umgekehrter Polarität angesteuert. Ohne darüber befindliche Teilfläche heben sich die Kopplungen jeweils umgekehrter Polaritäten der gegenüberliegenden Anregungselektroden unabhängig von der Grundverkopplung dieser beiden Elektroden und der Empfängerelektrode aus Symmetriegründen auf. Eine planare Teilfläche, beispielsweise in Form der beschriebenen halbkreisförmigen Teilfläche, gegebenenfalls mit der zusätzlichen weiteren Teilfläche, zerstört diese Symmetrie und koppelt entweder mehr von der positiven Flanke oder mehr von der negativen Flanke auf die Empfangselektrode. Ändert sich nun die kapazitive Grundverkopplung zwischen den Anregungs- und der zentralen Empfängerelektrode, z. B. durch eine homogene dielektrische Schicht (z. B. dem Wandgehäuse eines Wasserzählers), so kompensiert sich diese Änderung durch die Symmetrie der Anordnung automatisch. Auf diese Weise ist mit besonderem Vorteil eine universelle Sensorik realisiert, die auf verschiedene Zählertypen oder Zählerindividuen mit unterschiedlichen Wandstärken und dergleichen aufgesetzt werden kann, ohne dass sich hierdurch ergebende Unterschiede, hervorgerufen durch Änderung der zwischen dem Drehelement und der Anordnung befindliche dielektrische Schicht, sich nachteilig auswirken würden. Weiterhin vorteilhaft ist die Verdoppelung der Modulationsamplitude, da aufgrund der symmetrischen Ausgestaltung nun je nach Lage des Drehgebers nicht nur die Zustände "gekoppelt/ungekoppelt" den Modulationshub ergeben, sondern vielmehr der Hub zwischen positiver Kopplung (leitende Teilfläche des Drehelements befindet sich voll über einer Anregungselektrode mit positiver Flanke) und negativer Kopplung (leitende Teilfläche des Drehelements befindet sich voll über einer Anregungselektrode (= Kompensationselektrode) mit negativer Flanke) variiert. Hierdurch ist mit besonderem Vorteil die ideale Detektorschwelle bei Null und nicht bei einem bestimmten Betrag der Kopplung, wie dies bei der Ausgestaltung der Fall ist, bei der der Modulationshub üblicherweise auf die Zustände einerseits ohne Netto-Überkopplung (das Drehelement überdeckt nicht sowohl eine Anregungs- als auch eine Empfängerelektrode) und andererseits mit Netto-Überkopplung (das Drehelement überdeckt beide Elektroden) beschränkt. Dadurch ergibt sich auch bei einer Variation der Nutzkopplung z. B. durch den Abstand der Elektroden zur Teilfläche stets derselbe ideale Schwellwert Null von gerade kompensierter Kopplung. Damit ändern sich vorteilhaft die Kopplungszustände stets exakt symmetrisch nach einer Drehung um 180° mit einem Winkelversatz von genau 90°.

Erfindungsgemäß kann ferner vorgesehen sein, dass seitens der Detektionsmittel innerhalb der minimalen Umdrehungszeit der Teilfläche eine Anregungselektrode und deren gegenüberliegende als Kompensationselektrode dienende Anregungselektrode mit Spannungspulsen beaufschlagbar sind, und dass die Detektionsmittel zur Ermittlung einer Drehung anhand der ermittelbaren Polarität der an der Empfängerelektrode abgreifbaren Signale ausgebildet ist. Aufgrund der erfindungsgemäßen Ausbildung und Anordnung der Elektroden sowie der beschriebenen invertierten Ansteuerung genügt nämlich vorteilhaft eine Abtastrate von nur wenig über der Mindestabtastrate bei einer Arbeitsweise ohne Drehrichtungserkennung. Es wird hier also in regelmäßigen Zeitabständen von weniger als der Hälfte der minimalen Umdrehungszeit der Teilfläche jeweils eine Messung durchgeführt, die mit einer vorherigen verglichen wird. Insgesamt werden also wenigstens zwei pro Umdrehungszeit erfolgen.

Für den Fall, dass mit einer Drehrichtungserkennung gearbeitet werden soll, können erfindungsgemäß seitens der Detektionsmittel eine erste Anregungselektrode sowie deren zugeordnete Kompensationselektrode mit Spannungspulsen und anschließend eine zweite benachbarte Anregungselektrode sowie deren zugeordnete Kompensationselektrode mit Spannungspulsen beaufschlagt werden, wobei dies innerhalb der minimalen Umdrehungszeit der Teilfläche wenigstens viermal erfolgen kann. Die Detektionsmittel sind in diesem Fall zur Ermittlung der Drehung sowie der Drehrichtung anhand der ermittelten Polarität der an der Empfängerelektrode abgreifbaren Signale ausgebildet. Es werden also innerhalb regelmäßiger Zeitabstände von ≤ einem Viertel der minimalen Umdrehungszeit jeweils zwei Anregungselektroden und deren jeweilige Kompensationselektroden mit Spannungspulsen beaufschlagt und die Empfängersignale ausgewertet. Die Richtungserkennung erfolgt bevorzugt nach der Methode der Quadratur-Richtungserkennung. Die Signalerkennung und der Modulationshub werden im Übrigen noch dadurch verbessert, dass bei der erfindungsgemäßen symmetrischen Elektrodenanordnung nunmehr größere Flächen der Elektroden gegeben sind, was zu größeren Koppelkapazitäten und mithin zu größeren Nutzsignalen führt.

Gemäß einer besonders vorteilhaften Weiterbildung des Erfindungsgedankens kann vorgesehen sein, dass die Detektionsmittel derart ausgebildet sind, dass innerhalb der minimalen Umdrehungszeit der Teilfläche sequentiell alle vier Anregungselektroden und deren jeweils gegenüberliegende als Kompensationselektroden dienenden Anregungselektroden mit Spannungspulsen beaufschlagbar sind, wobei die Detektionsmittel zum Ermitteln der Polarität der an der Empfängerelektrode abgreifbaren Signale ausgebildet ist, wobei seitens der Detektionsmittel ein Signal erzeugt wird, wenn alle vier Polaritäten gleich sind. Bei dieser Erfindungsausgestaltung tastet man nicht nur wie bisher beschrieben jeweils zwei benachbarte Anregungselektroden mit positiven Flanken und die jeweils gegenüberliegenden, als Kompensationselektroden dienenden Anregungselektroden mit negativen Flankenpolaritäten ab, vielmehr werden hier sehr schnell hintereinander alle vier Anregungselektroden mit positiven Signalpulsen und die jeweils gegenüberliegenden Anregungselektroden mit negativen Pulsen abgetastet. Dies führt mit besonderem Vorteil dazu, dass bei ausreichender Nähe der Teilfläche üblicherweise stets zwei positive Empfangspulse von den beiden 90°-Anregungselektroden empfangen werden, über denen die Teilfläche steht, und zwei negative Empfangspulse werden von den Anregungselektroden empfangen, über denen die Teilfläche nicht steht. Es kann hierbei nie vorkommen, dass alle vier abgegriffenen Empfangssignale dieselbe Polarität aufweisen. Hierdurch ist mit besonderem Vorteil ein Sicherheitsmechanismus realisiert, der Schutz davor bietet, dass versucht wird, das Erfassungsergebnis zu manipulieren. Werden nämlich vier von ihrer Polarität her gleiche Empfangssignale ermittelt, ist dies ein eindeutiges Zeichen dafür, dass kein Drehelement in messtechnisch ausreichender Entfernung zu den Elektroden steht, oder aber wenn versucht wird, die Elektroden mit einer leitenden Folie oder dergleichen abzudecken. Diese Abtastart kann gelegentlich aus Sicherheitsgründen durchgeführt werden. Zur Verbesserung der Manipulationserkennung sollte vorteilhaft die Empfangsschwelle einen kleinen Offset haben und nicht genau bei Spannung Null liegen, um auch ohne Überkopplung stets ein Signal eindeutiger Polarität zu ergeben. Damit ist auch bei beliebig lang stehendem Drehelement stets die Existenz des symmetrieunterbrechenden Drehelements bzw. dessen Teilfläche mit seiner 180°-Symmetrie in funktionsausreichender Entfernung zu entdecken. Diese erfindungsgemäße Ausgestaltung schafft also eine "elektronische Plombe", die Manipulationen vorbeugt.

Wie beschrieben sind die Elektroden auf einfache Weise durch dünne Flächen aus leitendem Material herstellbar. Sie sollten zweckmäßigerweise auf einer mit einer Rückseitenmetallisierung versehenen Leiterplatte ausgebildet sein, wobei es sich bei dieser bevorzugt um eine Schaltungsplatine der Auswertungselektronik des Detektionsmittels handeln kann. Sie haben sehr geringe Fertigungstoleranzen und einen vernachlässigbaren Temperaturgang. Bedingt durch die bevorzugt vorgesehene Rückseitenmetallisierung der doppelseitigen Leiterplatte ist es darüber hinaus vorteilhaft möglich, statische und dynamische elektrische Felder leicht und effektiv abschirmen zu können. Die Anordnung selbst kann erfindungsgemäß Teil eines Volumenmessgeräts sein.

Neben der Anordnung betrifft die Erfindung ferner ein Volumenmessgerät zum Messen des Volumens eines durch dieses strömende Mediums, insbesondere einen Wasserzähler, mit einem vom Medium in Rotation versetzbaren Drehteil, insbesondere einem Flügelrad. Dieses Volumenmessgerät zeichnet sich erfindungsgemäß durch eine Anordnung der vorbeschriebenen Art aus, wobei das Drehelement mit dem Drehteil, insbesondere dem Flügelrad bewegungsgekoppelt ist.

Das Volumenmessgerät kann erfindungsgemäß ein mechanisches Zählwerk besitzen, welches über ein Zählwerkgetriebe mit dem Drehteil, insbesondere dem Flügelrad bewegungsgekoppelt ist, wobei das Drehelement seinerseits mit dem Zählwerk oder dem Zählwerkgetriebe bewegungsgekoppelt ist, bevorzugt über ein eigenes Untersetzungsgetriebe. Als besonders zweckmäßig hat es sich erwiesen, wenn das Drehelement eine Rolle des als Rollenzählwerk ausgebildeten Zählwerks ist, wobei die elektrisch leitende Teilfläche an einer Seitenfläche der Rolle vorgesehen ist.

Eine alternative Erfindungsausführungsform sieht demgegenüber vor, dass das Drehelement ein Zeiger des Zählwerks ist, an dessen Oberseite die elektrisch leitende Teilfläche vorgesehen ist, und über dem sich eine Zählwerksabdeckung befindet, wobei das Sensorelement und das Detektionselement an der gegenüberliegenden Seite der Zählwerksabdeckung vorgesehen sind. Sensorelement und Detektionsmittel können in einer lösbar anbringbaren Einheit integriert sein. Bei dieser Ausführungsform befindet sich also die elektrische Teilfläche quasi innerhalb des Volumenmessgeräts, das Sensorelement und das Detektionsmittel dagegen außerhalb des Volumenmessgeräts, sie sind auf die in der Regel in Form einer transparenten Kunststoffkappe ausgeführte Zählwerksabdeckung aufgesetzt. Die Abtastung erfolgt durch die Zählwerksabdeckung hindurch. Als Zeiger bietet sich der ein-Liter-Zeiger des z.B. als Wasserzähler ausgebildeten Volumenmessgeräts an. Diese Ausführungsform bietet den beachtlichen Vorteil, generell ein Volumenmessgerät, z.B. in Form eines Wasserzählers mit einem ein-Liter-Zeiger, auf dem bereits die elektrisch leitende Teilfläche vorgesehen ist, auszubilden, eichtechnisch zuzulassen, zu beglaubigen und zu installieren. Soll dann zu einem späteren Zeitpunkt eine zusätzliche elektronische Funktion, z.B. die Funkübertragung von Zählerständen oder dergleichen realisiert werden, so kann dies am bereits betriebsfertig eingebauten Volumenmessgerät durch eine rein passive aufzusetzende Einheit, die das Sensorelement und das Detektionsmittel enthält, realisiert werden, wobei die messtechnischen Eigenschaften nicht beeinflusst werden, auch die betriebstechnische Zulassung des Volumenmessgeräts wird hierdurch nicht infrage gestellt. Die quasi indirekte Abtastung durch die Zählwerksabdeckung hindurch hat ferner noch den Vorteil, dass die Abdeckung als dielektrische Schicht in den Koppelkapazitäten zwischen den beiden sensorseitig vorgesehenen Elektroden und der elektrisch leitenden Teilfläche dient, wodurch die Kapazität noch etwas vergrößert wird und die Sensoranordnung noch besser arbeitet.

Daneben betrifft die Erfindung ferner ein Volumenmessgerätesystem, umfassend ein Volumenmessgerät zum Messen des Volumens eines durch dieses strömende Mediums, insbesondere Wasserzähler, mit einem vom Medium in Rotation versetzbaren Drehteil, insbesondere einem Flügelrad, sowie einem mechanischen Zählwerk mit wenigsten einem Drehelement in Form eines Zeigers, der mit dem Drehteil bewegungsgekoppelt ist und an dessen Oberseite eine elektrisch leitende Teilfläche vorgesehen ist, und der über eine Zählwerksabdeckung nach außen hin gekapselt ist, sowie einer am Volumenmessgerät außenseitig lösbar, gegebenenfalls nachrüstbar anbringbaren Einheit mit einem Sensorelement und einem Detektionsmittel, wobei das Drehelement in Form des Zeigers, das Sensorelement und das Detektionsmittel eine Anordnung nach einem der diesbezüglichen Ansprüche bilden. Dieses System ermöglicht insbesondere die bereits beschriebene Nachrüstbarkeit, da das Volumenmessgerät selbst bereits von Haus aus mit der entsprechend leitenden Teilfläche, die, da es sich um eine einfache Flächenelektrode handelt, äußerst einfach aufgebracht werden kann, versehen werden kann, die zur Abtastung erforderlichen Teile können in einer separaten Einheit integriert sein, die ein eigenes Systemelement bildet und zu einem beliebigen Zeitpunkt am Volumenmessgerät angebracht werden kann. Für den Fall, dass die Einheit lösbar ist und z.B. nachgerüstet wurde, ist sie entsprechend zu verplomben oder alternative Sicherungsmittel vorzusehen.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipskizze eines Drehelements mit aufgebrachter elektrisch leitender Teilfläche,
- Fig. 2: eine Prinzipskizze eines Sensorelements mit verschiedenen Elektroden auf einer Leiterplatte,
- Fig. 3: eine Skizze zur Darstellung der Anordnung des Drehelements aus Fig. 1 bezüglich der Elektrodenkonfiguration aus Fig. 2,
- Fig. 4: eine Prinzipskizze der elektrischen Verschaltung der relevanten Komponenten der Anordnung,
- Fig. 5: eine Prinzipskizze der Verstärkerschaltung für das Empfängersignal,
- Fig. 6: eine Schnittansicht eines erfindungsgemäßen Volumenmessgeräts in Form eines Wasserzählers,
- Fig. 7: eine Aufsicht im Teilschnitt auf den Zähler aus Fig. 6,
- Fig. 8: eine Aufsicht auf ein erfindungsgemäßes Volumenmessgerät einer zweiten Ausführungsform,
- Fig. 9: eine Teilschnittansicht des Volumenmessgeräts aus Fig. 8,
- Fig 10: eine Prinzipskizze zur Darstellung einer weiteren erfindungsgemäßen Ausführungsform der Elektrodenkonfiguration,
- Fig. 11: eine Detailansicht einer erfindungsgemäßen Ausgestaltung einer leitenden Teilfläche,
- Fig. 12: eine Prinzipskizze der elektrischen Verschaltung der Elektrodenanordnung aus Fig. 11 sowie die am Verstärkerausgang abgreifbaren Signale der Empfängerelektrode bei unterschiedlichen Stellungen der Teilfläche, und
- Fig. 13: eine Prinzipskizze der elektrischen Verschaltung sowie eine Darstellung der am Verstärker abgreifbaren Empfängerelektrodensignale bei sehr schneller Pulsbeaufschlagung aller vier Anregungselektroden.

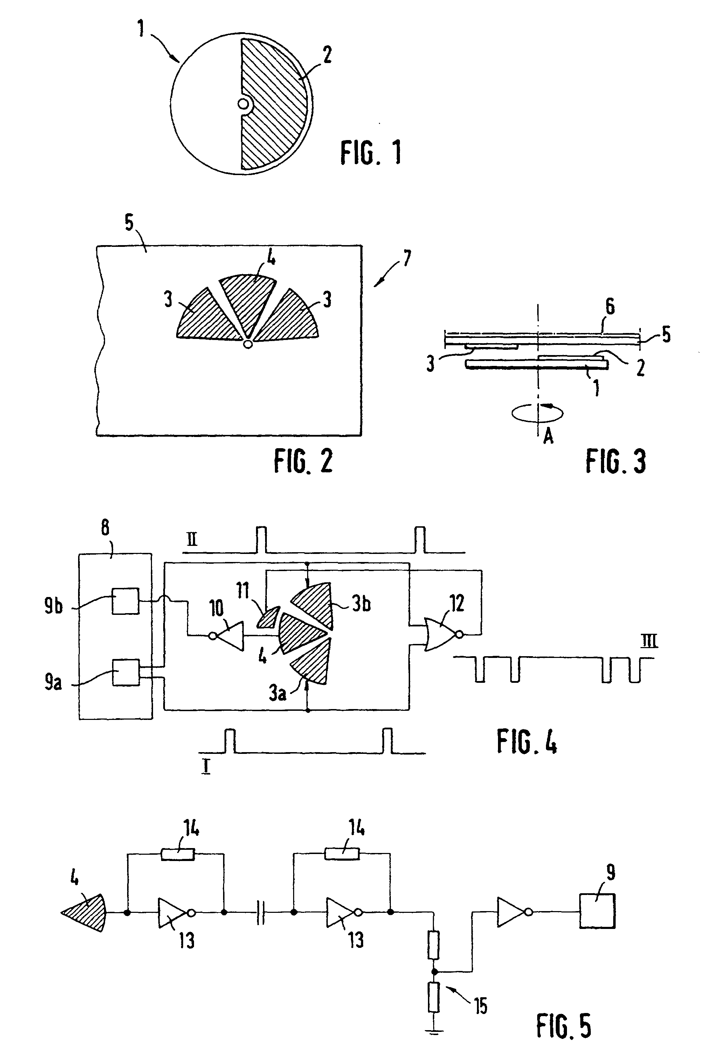

Fig. 1 zeigt ein scheibenförmiges Drehelement 1, auf welches an einer Seite eine Teilfläche 2 aus elektrisch leitendem Material, beispielsweise in Form einer Metallisierung aufgebracht ist. Die Teilfläche besitzt die Form eines Kreissegments und erstreckt sich im gezeigten, nicht erfindungsgemäßen Ausführungsbeispiel über 180°. Das Drehelement 1 ist Teil einer Anordnung zur Erfassung der Rotation desselben, wobei die Teilfläche 2 für die Erfassung eine wichtige Rolle spielt. Diese Teilfläche 2 wirkt mit mehreren Elektroden 3, 4 eines Sensorelements 7 zusammen, die an einer Leiterplatte 5, die mit einer Rückseitenmetallisierung 6 versehen ist, zusammen. Auch die Elektroden 3, 4 besitzen die Form von Kreissegmenten, wobei im gezeigten Beispiel alle Elektroden 3, 4 ein Kreissegment von ca. 50° belegen. Zwischen zentraler Elektrode 4 und den äußeren Elektroden 3 befindet sich ein Spalt von ca. 10°. Die beiden Elektroden 3 dienen im gezeigten Ausführungsbeispiel als Anregungselektroden, die Elektrode 4 als Empfängerelektrode, wobei ihre Funktion bezüglich Fig. 4 noch näher beschrieben wird.

Fig. 3 zeigt in Form einer nicht erfindungsgemäßen Prinzipskizze die Anordnung des Drehelements 1 bezüglich der Elektroden 3, 4. Das Drehelement 1, welches, wie durch den Pfeil A dargestellt ist, um eine Achse rotiert, ist mit der Teilfläche 2 zu den Elektroden 3 hin gerichtet. Wird das Drehelement 2 in eine Position gedreht, in welcher die Teilfläche 2 wenigstens einer der Elektroden 3, 4 gegenüberliegt, so wird hierdurch ein drehwinkelabhängiger Kondensator zwischen der Teilfläche 2 und der jeweiligen Elektrode 3, 4 gebildet. Dreht nun das Drehelement 1 um seine Rotationsachse A, so wird zu einem bestimmten Zeitpunkt eine Stellung erreicht, in welcher sowohl eine Anregungselektrode 3 als auch die Empfängerelektrode 4 zumindest teilweise gemeinsam überdeckt werden. In diesem Fall koppelt die Teilfläche 2 die beiden Elektroden 3, 4 kapazitiv, was dazu führt, dass bei Anlegen eines Spannungspulses an die kapazitiv gekoppelte Anregungselektrode 3 ein entsprechendes Empfängersignal an der Empfängerelektrode 4 abgreifbar ist.

Fig. 4 zeigt eine Prinzipskizze einer nicht erfindungsgemäßen Anordnung, wobei hier das Drehelement nicht dargestellt ist. Über ein Detektionsmittel 8, welches Spannungserzeugungsmittel 9a beinhaltet, wird an die erste Anregungselektrode 3a ein Spannungspuls mit einer Frequenz, die wenigstens dem vierfachen, bevorzugt dem sechs- bis achtfachen der maximalen Umdrehungsfrequenz des Drehelements entspricht, angelegt. Im gezeigten Beispiel werden Rechteckpulse angelegt, siehe die Kurve I. An die zweite Anregungselektrode 3b werden ebenfalls mit gleicher Frequenz entsprechende Spannungspulse gemäß Kurve II über das Spannungserzeugungsmittel 9 a angelegt, jedoch zeitversetzt. Auch hier handelt es sich um Rechteckpulse. Überdeckt nun die elektrisch leitende Teilfläche 2 des Drehelements beispielsweise sowohl die Anregungselektrode 3a als auch die Empfängerelektrode 4, so bildet die Anregungselektrode 3a mit der ihr gegenüberliegenden Teilfläche 2 einen kleinen Kondensator von z.B. 0,1 pF. Die Größe dieses Wertes kann anhand des Durchmessers der Elektroden, dem jeweiligen Winkel, den diese belegen sowie dem Abstand zur Teilfläche variiert werden. Ebenso bildet die Empfängerelektrode 4 mit der ihr gegenüberliegenden Teilfläche 2 des Drehelements 1 einen solchen drehwinkelabhängigen Kondensator, ebenfalls beispielsweise von ca. 0,1 pF. Die Teilfläche 2 verbindet nun diese beiden Teilkondensatoren zu einer Serienschaltung von dann 0,05 pF zwischen Anregungselektrode 3a und Empfängerelektrode 4. Beträgt die Eingangskapazität der Auswerteeinrichtung 9b des Detektionsmittels 8, der ein Verstärker 10 vorgeschalten ist, beispielsweise 5 pF, so wird sich bei einem üblichen Anregungspuls von 3 V an der Auswerteelektronik bzw. dem Verstärker 10 ein Empfängersignal von (0,05 pF/5pF) · 3 V = 30 mV einstellen. Bei einem Eingangswiderstand der Auswerteschaltung von z.B. 10 MOhm wird dieses Empfangssignal zwar schon nach einer Dauer von τ = 10 MOhm · 5 pF = 50 µs wieder verschwinden, jedoch kann die Auswerteelektronik 9 das Empfängersignal kurz, z.B. 1-10 µs nach dem Anlegen der Anregungs-Spannungsflanke abtasten, speichern und dann feststellen, ob die Anregungselektrode und die Empfängerelektrode gemeinsam von der leitenden Teilfläche überdeckt wurden. Sowohl die Erzeugung der 3V-Rechteckimpulse als auch der Nachweis der im mV-Bereich liegenden Empfängersignale ist mit konventioneller CMOS-Digital-Logik preisgünstig und stromsparend möglich.

Da die beiden Elektroden 3a und 3b mit separaten Rechtecksignalen zeitversetzt angesteuert werden, ist es ferner möglich, aus der zeitlichen Abfolge der an der Empfängerelektrode 4 ermittelten, anregungselektrodenspezifischen Signale die Drehrichtung bestimmen zu können.

Da - unabhängig von der Stellung des Drehelements und damit der Teilfläche 2 - auch eine Koppelkapazität zwischen den Anregungselektroden 3a, b und der Empfängerelektrode 4 gegeben ist, ist zur weitgehenden Kompensation dieses Kapazitäts-Grundwertes eine Kompensationselektrode 11 vorgesehen, welche benachbart zur Empfängerelektrode 4 angeordnet ist und die mit dieser ebenfalls eine Kapazität bildet. Die Kapazität, die hierdurch gebildet wird, ist bevorzugt gleichgroß bemessen wie die zwischen den jeweiligen Anregungselektroden 3a, b und der Empfängerelektrode 4 gebildeten Kapazitäten. Diese Kompensationselektrode 11 wird zeitgleich zu den Anregungselektroden 3a, b ebenfalls mit Anregungspulsen beaufschlagt, siehe die Kurve III, jedoch sind diese Pulse invertiert zu den Anregungspulsen für die Anregungselektroden 3a, b, was mittels eines NOR-Gatters 12 ermöglicht wird. D.h., es wird mit jeder Anregungsflanke an der jeweiligen Anregungselektrode wie auch an der Kompensationselektrode, die zeitgleich jedoch invertiert zueinander gegeben werden, bedingt durch die inhärenten Koppelkapazitäten ein "positives" und ein "negatives" Empfängersignal an der Empfängerelektrode 4 generiert, so dass im Endeffekt ein Netto-Empfängersignal von "Null" vorliegt. Hierdurch kann die inhärente Koppelkapazität kompensiert werden, so dass auf sehr aufwendige Verstärkungs- und Auswertemittel verzichtet werden kann, die dann erforderlich wären, wenn aufgrund der Geometriebedingungen die durch die Kopplung mittels der Teilfläche 2 hervorgerufenen Empfängersignale gegenüber dem inhärenten Koppelkapazitätsgrundwert nur sehr klein wären.

Einen einfachen Aufbau einer Verstärkerschaltung, die im Hinblick auf die im mV-Bereich liegenden Empfängersignale zweckmäßig ist, zeigt Fig. 5. Zum Einsatz kommen im gezeigten Beispiel zwei kaskadiert geschaltete CMOS-Inverter 13, die jeweils über einen Rückkoppel-Widerstand 14 rückgekoppelt sind. Jede Verstärkerstufe bewirkt eine Verstärkung des von der Empfängerelektrode 4 gelieferten Empfängersignals um einen Faktor von ca. 30. Das hierdurch verstärkte Signal wird anschließend an die Auswerteeinrichtung 9b gegeben, wobei über entsprechende Schwellwertmittel 15 umfassend diverse Widerstände eine Signalschwelle, beispielsweise von 150 mV gesetzt wird, die bewirkt, dass nur Signale, die größer als der Schwellwert sind, tatsächlich an die Auswerteeinrichtung 9b z.B. in die Form einer Auswertelogik gegeben werden, die größer als der Schwellwert sind. Hierdurch wird erreicht, dass nur solche Signale berücksichtigt werden, die auf eine entsprechende Mindestüberdeckung der leitenden Teilfläche von Anregungs- und Empfangselektrode schließen lassen.

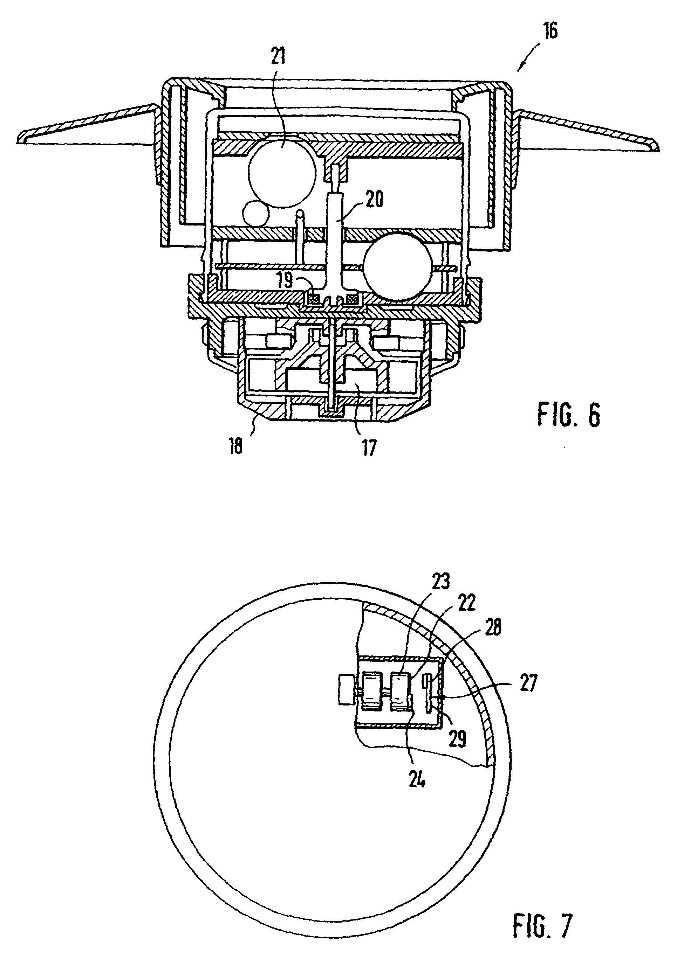

Fig. 6 zeigt schließlich ein Volumenmessgerät in Form eines Wasserzählers 16. Der Aufbau eines solchen Wasserzählers ist bekannt, auf ihn ist im Detail nicht näher einzugehen. Die für die vorliegende Erfindung relevanten Teile sind das Drehteil in Form eines Flügelrades 17, welches vom durch den unteren Teil 18 des Zählers strömenden Wasser in Rotation versetzt wird. Die Rotation wird über eine Magnetkupplung 19 an eine Drehstange 20 übertragen, die ihrerseits in Bewegungskopplung mit einem mechanischen Rollenzählwerk 21 steht, an welchem, siehe Fig. 7, der gemessene Verbrauch angezeigt wird. Wie Fig. 7 zu entnehmen ist, ist an der ebenen Seitenfläche 22 der dekadischen Rolle 23, die hier das Drehelement darstellt, die Teilfläche 24 aufgebracht. Dem Rollenzählwerk zugeordnet ist das Detektionsmittel 27 mit dem Sensorelement mit der die entsprechenden Elektroden 28 tragende Leiterplatte 29. Die Spannungserzeugungsmittel und die Auswertemittel sind aus Gründen der Übersichtlichkeit nicht dargestellt. Auf diese Weise kann die Rotation der Rolle 23 erfasst werden und entsprechend hierüber das erfasste Durchflussvolumen akkumuliert werden. Über einen entsprechenden, hier nicht näher dargestellten Ausgang, bei dem es sich um einen elektronischen oder aber einen optischen Ausgang handeln kann, kann dieser Wert dann elektronisch oder optisch von außen mittels eines Lesegeräts abgegriffen werden. Bei der Rolle 23 handelt es sich bevorzugt um die ein-Liter-Rolle.

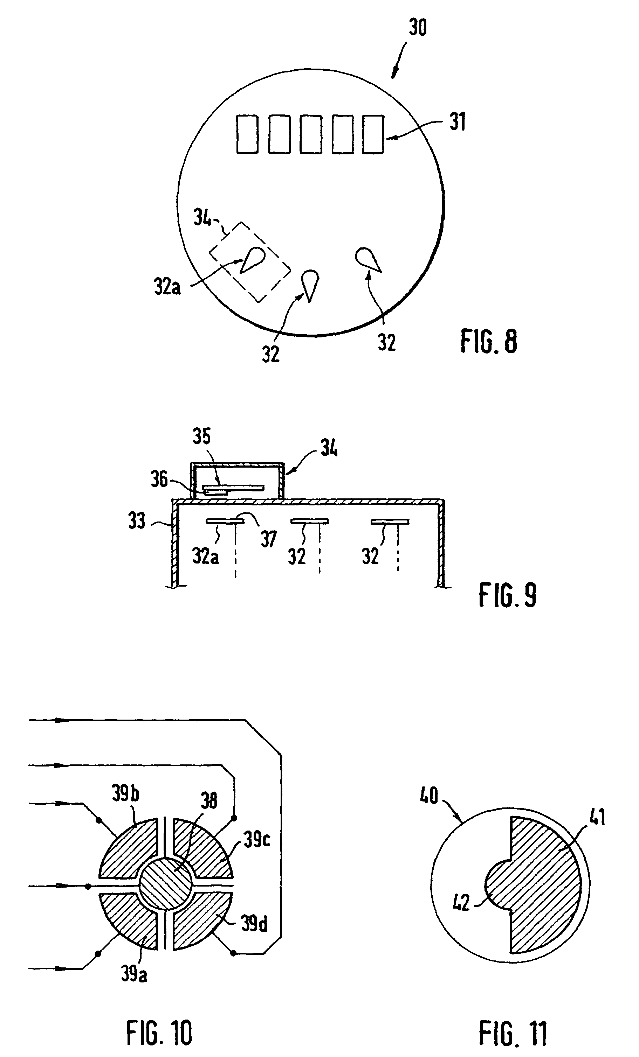

Die Figuren 8 und 9 zeigen eine zweite Ausführungsform eines Volumenmessgeräts in Form eines Wasserzählers 30. Bei diesem ist ebenfalls ein mechanisches Zählwerk vorgesehen, welches einerseits ein Rollenzählwerk 31 umfasst sowie mehrere Zeiger 32. Wie Fig. 9 zeigt, sind die Zähler 32 bzw. das gesamte Zählwerk von einer kappenartigen, in der Regel aus transparentem Kunststoff bestehenden Zählwerkabdeckung 33 übergriffen. Dem Zeiger 32a ist eine separate Einheit 34 zugeordnet, in welcher das Sensorelement 35 mit den entsprechenden Elektroden 36 integriert ist, ferner die entsprechenden erforderlichen Detektionsmittel, die hier aus Gründen der Übersichtlichkeit nicht dargestellt sind. In diesem Fall erfolgt die Abtastung der elektrisch leitenden Teilfläche 37, die auf der Oberseite des Zeigers 32a vorgesehen ist, durch die Zählwerksabdeckung 33 hindurch, die als dielektrische Schicht innerhalb der Koppelkapazitäten wirkt und eine Erhöhung derselben bewirkt. Die Einheit 34 selbst kann lösbar und insbesondere nachrüstbar am Volumenmessgerät angebracht werden, d.h., das Volumenmessgerät wird von Haus aus mit einem Zähler 32a mit der elektrisch leitenden Teilfläche versehen, sollen dann zusätzliche elektronische Funktionen wie bespielsweise eine Funkübertragung oder dergleichen am Gerät realisiert werden, wird einfach die Einheit 34 aufgesetzt, die die Volumenerfassung ermöglicht und in der dann noch zusätzliche, für die gewünschte elektronische Funktion erforderliche Komponente, z.B. in Form einer Funkeinrichtung integriert sind. Nicht dargestellt sind ferner die entsprechenden sicherheitstechnischen Einrichtungen, die verhindern, dass ein unbefugtes Lösen der Einheit 34 erfolgen kann, z.B. in Form einer Plombierung oder dergleichen.

Fig. 10 zeigt eine weitere erfindungsgemäße Elektrodenkonfiguration. Diese besteht aus einer zentralen Empfängerelektrode 38, die im gezeigten Ausführungsbeispiel kreisförmig ist. Symmetrisch um die Empfängerelektrode 38 herum angeordnet sind vier Anregungselektroden 39a, 39b, 39c, 39d, die jeweils als Kreisringsegmente ausgebildet sind und einen Segmentwinkel von 90° bestreichen. An jeder der Anregungselektroden 39a bis 39d kann über geeignete Ansteuerleitungen ein Spannungspuls angelegt werden, an der Empfängerelektrode, die mit einem nachgeschalteten, nicht gezeigten Verstärker verbunden ist, werden die entsprechenden Koppelsignale abgegriffen. Die Ausgestaltung ist dabei derart, dass jeweils zwei einander gegenüberliegende Elektroden ein Elektrodenpaar bilden, von denen jeweils die eine als Anregungselektrode, die gegenüberliegende als Kompensationselektrode dient und mit einem invertierten Spannungspuls beaufschlagt wird. Aufgrund der identischen Elektrodenfläche der hierbei involvierten Elektroden und deren identischem Abstand zur Empfängerelektrode 38 ergibt sich aus Symmetriegründen, dass etwaige inhärente Koppelkapazitäten vollständig vermieden werden, das heißt, sie heben sich hier gegeneinander auf. Angesteuert werden also beispielsweise zunächst die Anregungselektrode 39a mit einem Spannungspuls mit positiver Flanke, gleichzeitig wird die gegenüberliegende Anregungselektrode 39c mit einem gleichgroßen invertierten Spannungspuls mit negativer Flanke angesteuert. Das resultierende Empfängerelektrodensignal wird hierzu abgegriffen und seitens der Detektionsmittel verarbeitet. Anschließend wird ein Spannungspuls mit positiver Flanke an die Anregungselektrode 39b und zeitgleich ein Spannungspuls mit negativer Flanke an die gegenüberliegende Anregungselektrode 39d gelegt, und wiederum das resultierende Empfängerelektrodensignal abgegriffen.

Ersichtlich zeigen die Elektroden eine hinreichend große Fläche, so dass relativ Koppelkapazitäten gegeben sind, die zu hinreichend hohen Signalen führen, was dahingehend von Vorteil ist, als damit auch Änderungen im Abstand zwischen der Teilfläche, die beispielsweise in einem Wasserzähler angeordnet ist, und der Elektroden, die beispielsweise an einer zum Erfassen am Wasserzählergehäuse aufsetzbaren externen Einrichtung angeordnet sind, problemlos kompensiert werden können, da auch bei relativ großem Abstand noch hinreichend hohe Signale abgegriffen werden können. Vorteilhaft ergibt sich aufgrund der zeitgleichen invertierten Ansteuerung auch ein hinreichend hoher Modulationshub, nämlich der zwischen positiver und negativer Kopplung, bei welchem jeweils die Teilfläche voll über einer Anregungselektrode mit positiver Flanke oder aber über einer Anregungselektrode mit negativer Flanke steht. Weiterhin ändert sich aufgrund der symmetrischen Anordnung und der zeitgleichen invertierten Ansteuerung die Kopplungszustände stets genau symmetrisch nach einer Drehung um 180° mit einem Winkelversatz von genau 90°. Man erhält also um 90° gegeneinander versetzte Signale, was einer idealen 90°-Quadraturgeometrie entspricht. Hieraus ist auch auf vereinfachte Weise eine Richtungserkennung unter Anwendung der Quadratur-Methode möglich.

Fig. 11 zeigt ein Drehelement 40 mit aufgebrachter elektrisch leitender Teilfläche 41, beispielsweise einer aufgedampften Metallisierung. An der großen halbkreisförmigen Teilfläche 41 ist eine weitere kleinere Teilfläche 42 angeordnet. Die Form dieser weiteren Teilfläche 42 entspricht bevorzugt der Form der zentralen Empfängerelektrode 38. Hierdurch ist realisiert, dass die Empfängerelektrode stets zur Gänze überdeckt wird, die eine Hälfte durch die weitere Teilfläche 42, die andere Hälfte der Elektrode 38 durch die Teilfläche 41. Größenmäßig sind die Teilflächen 41, 42 unter Berücksichtigung der Größe der Empfängerelektrode 38, gegebenenfalls auch der der Anregungselektroden 39a, 39d ausgelegt. Die Teilfläche bzw. das Drehelement werden bevorzugt planar realisiert. Bei einem Außenradius der Teilfläche 41 von R ergibt sich ein maximales Empfängerelektrodensignal, wenn der Radius r der Empfängerelektrode ca. r = 0,6 x R beträgt. Der ideale Durchmesser gleichbedeutend mit einem maximalen Empfangssignal beträgt bei einer einfach ausgeführten Teilfläche, wenn also nur die Teilfläche 41, nicht aber die Teilfläche 42 realisiert ist, r = 0,58 x R , bei einer Ausgestaltung wie in Fig. 11 gezeigt beträgt der Radius r = 0,64 x R. Die Anregungselektrode 39a - 39b bzw. der Durchmesser der Teilfläche 41 sollten so gewählt werden, dass eine vollständie Überdeckung zweier benachbarter Anregungselektroden möglich ist.

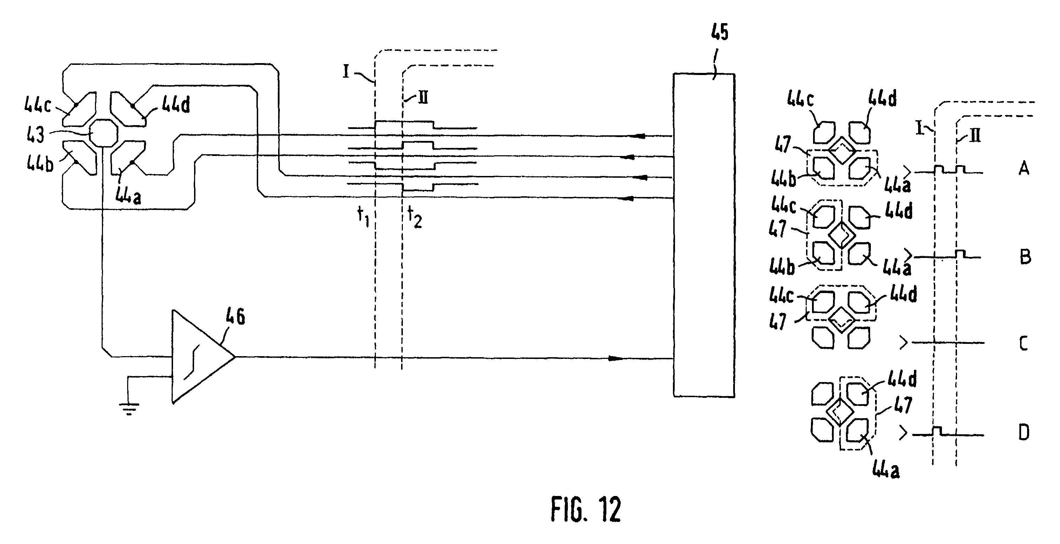

Fig. 12 zeigt schematisch die Verschaltung einer Elektrodenkonfiguration gem. Fig. 10 nebst deren Ansteuerung sowie ein Beispiel für die an der Empfängerelektrode abgegriffenen, am Verstärkerausgang liegenden Signale. Bei dem dargestellten Beispiel sind die Empfängerelektrode 43 und die Anregungselektroden 44a, 44b, 44c, 44d nicht kreisförmig bzw. kreisringsegmentartig, sondern mehreckig ausgebildet. Nach wie vor beibehalten ist aber die symmetrische Anordnung. Die Anregungselektroden 44a - 44d werden über ein Detektionsmittel 45 mit Spannungspulsen beaufschlagt. Anhand der eingezeichneten Spannungspulse I und II ist ersichtlich, dass im Zeitpunkt t₁ zunächst die Anregungselektrode 44a und die gegenüberliegende, als Kompensationselektrode dienende Elektrode 44c mit invertierten Spannungsflanken beaufschlagt werden. Im gezeigten Beispiel wird die Elektrode 44a mit einer positiven Pulsflanke, die Elektrode 44c mit einer negativen Pulsflanke beaufschlagt. Das an der Empfängerelektrode 43 abgreifbare Signal wird über einen Verstärker 46 verstärkt und an das Detektionsmittel 45 gegeben. Nach Abgriff des zum Spannungspuls I gehörenden Empfängersignals wird zum Zeitpunkt t₂ ein Spannungspuls II gegeben, der mit seiner positiven Flanke an die Anregungselektrode 44b, mit seiner negativen an die Anregungselektrode 44d gegeben wird. Auch zu diesem Anregungspuls wird über den Analogkomparator 46 seitens der Detektormittel 45 ein Empfängerelektrodensignal abgegriffen. Der Analogkomparator erfasst die positiven Signale und gibt entsprechende logische Signale aus. Es bleibt darauf hinzuweisen, dass für die Erzeugung eines Empfängersignals lediglich die Flanken relevant sind, da diese zu einer Spannungsdifferenz und damit zu einem Spannungsstoß führen, der ursächlich für die Signalerzeugung ist. Die aufgrund der Kopplung gegebenen Ladungsdifferenz baut sich innerhalb weniger µs aufgrund fließender Leckströme wieder ab, so dass wenige µs nach Anlegen des Spannungsstoßes trotz der gegebenen Kapazitätskopplung kein Signal mehr abgegriffen werden kann.

In Fig. 12 sind ferner die am Ausgang des Analogkomparators 46 abgreifbaren Signale zu unterschiedlichen Stellungen der Teilfläche gegeben. Da der Analogkomparator nur positive Signale erfasst, liegen am Detektionsmittel nur positive oder keine Signale an. Im oberen Fall A überdeckt die leitende Teilfläche die beiden Elektroden 44a, 44b. Beide werden mit positiven Spannungsflanken angesteuert, so dass zwei positive Empfängersignale zu den beiden Pulsen I, II aufgenommen werden. Im Fall B dreht die Teilfläche 47 weiter und überdeckt die Elektroden 44b, 44c. Aufgrund der Ansteuerung der Elektrode 44c mit der negativen invertierten Flanke ergibt sich zum Puls I kein Signal, zum Puls II hingegen ein positives, da die Elektrode 44b mit der positiven Flanke angesteuert wird.

Bei Weiterdrehung überdeckt die Teilfläche 47 die Elektroden 44c, 44d. Aufgrund deren Ansteuerung mit der jeweils negativen Flanke werden keine Signale zu den Pulsen I, II erhalten. Im Fall D werden die Elektroden 44d, 44a überdeckt, was aufgrund der Ansteuerung zu einem positiven Signal zum Puls I führt, zum Puls II liegt am Detektionsmittel kein Signal an. Aufgrund der Empfängersignale bzw. der Signalverteilung zu den jeweiligen Pulsen ist es möglich, dass die Detektionsmittel 45 bereits aus den Empfängersignalen, die in den Fällen A und B ermittelt werden, eine Richtungserkennung ermitteln können. Die jeweiligen Signale zu den Pulsen I, II weisen wie beschrieben bestimmte Polaritäten auf, die Quadratur-Richtungserkennung ermöglichen. Die beiden im jeweiligen Überdeckungsfall erhaltenen Signale bilden jeweils das übliche Zwei-Bit-Quadratursignal zur Richtungserkennung.

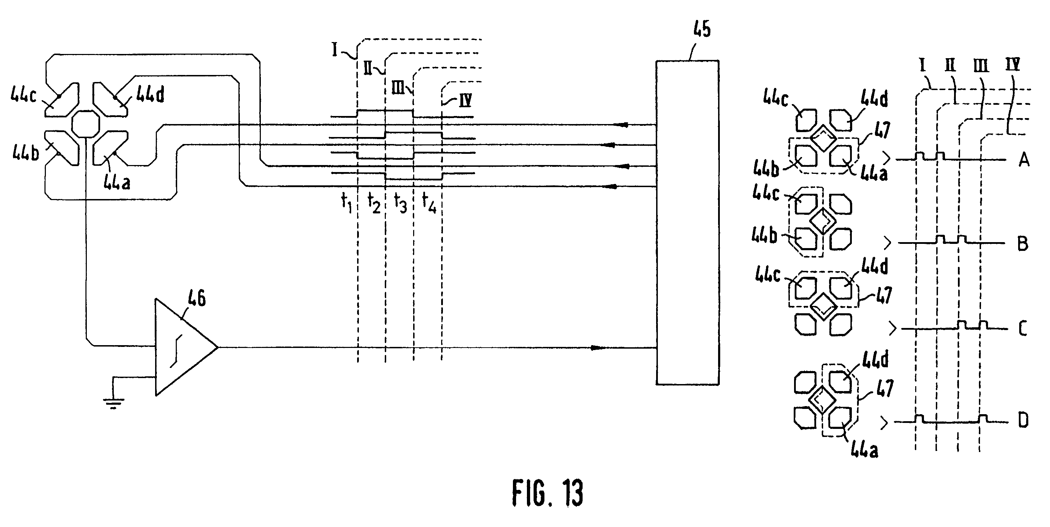

Fig. 13 zeigt schließlich den Signalpulsverlauf sowie ein Beispiel für die Empfängersignale bei unterschiedlichen Teilflächenstellungen in dem Fall, in dem in sehr schneller Abfolge jede der Elektroden 44a - 44d als echte" Anregungselektrode mit einem positiven Spannungspuls und zeitlich das jeweilige Gegenüber mit einem negativen Spannungspuls beaufschlagt wird. Diese Betriebsweise wird beispielsweise in bestimmten Zeitabständen durchgeführt und dient zur Ermittlung, ob tatsächlich eine leitende Teilfläche in irgendeiner beliebigen Position gegenübersteht oder nicht. Hierdurch sollen Manipulationen vermieden werden. Der Aufbau der Konfiguration entspricht der aus Fig. 12. Im Zeitpunkt t₁ werden zunächst die Elektroden 44a und 44c mit einer positiven bzw. negativen Spannungsflanke angesteuert und das zugehörige Signal an der Empfängerelektrode 43 abgegriffen. Der Ansteuerpuls liegt bis zum Zeitpunkt t₃ an und fällt dann auf Null ab. Im Zeitpunkt t₂ wird die Anregungselektrode 44b mit der positiven Flanke, die Anregungselektrode 44d mit der negativen Flanke beaufschlagt, auch dieser Ansteuerpuls steht bis zum Zeitpunkt t₄ und fällt dann auf Null ab. Im Zeitpunkt t₃ wird die Anregungselektrode 44c mit der positiven, die Anregungselektrode 44a mit der negativen Flanke angesteuert. Diese Flanken werden durch den abfallenden, seit t₁ anstehenden Puls gegeben. Schließlich werden im Zeitpunkt t₄ die Anregungselektrode 44 d mit der positiven und die Elektrode 44b mit der negativen Flanke beaufschlagt, auch hier werden die Flanken von dem seit dem Zeitpunkt t₂ anstehenden Puls erzeugt. Diese sequentielle Pulsaufschlagung geht sehr schnell vonstatten, sie erfolgt innerhalb einer Zeitspanne, die deutlich niedriger als die minimale Umdrehungszeit der Teilfläche ist.

Fig. 13 zeigt die erhaltenen Pulse zu unterschiedlichen Stellungen der Teilfläche. Steht die Teilfläche 47 beispielsweise wie im Fall A dargestellt, so sind die Elektroden 44a, 44b gekoppelt. Beide werden zu den Signalpulsen I und II jeweils mit der positiven Flanke beaufschlagt, so dass zwei positive Signale abgegriffen werden. Zu den Pulsen III und IV werden beide aber mit negativen Flanken beaufschlagt, so dass keine Signale am Detektionsmittel anstehen. Ersichtlich werden also unterschiedliche Signale erhalten, wenn eine leitende Teilfläche gegenübersteht. Für den Fall, dass eine solche nicht gegeben wäre, wäre keine kapazitive Elektrodenkopplung gegeben, so dass insgesamt kein Signalpuls erhalten wird. Für den Fall, dass dies detektiert wird, ist eindeutig erkennbar, dass keine leitende Teilfläche gegenübersteht, mithin also zu den Aufnahmezeitpunkten kein Geberelement und damit auch kein Wasserzähler in Reichweite der Elektroden ist. Selbst für den Fall, dass die Teilflächenstellung von der idealisierten Stellung abweicht und die Elektroden nur teilweise überdeckt sind, was in der Regel der Normalfall ist, ergeben sich trotz allem bei Vorhandensein einer Teilfläche immer unterschiedliche Empfängersignale.

Im Fall B werden die Anregungselektroden 44b, 44c idealisiert vollständig überdeckt. Da die Elektrode 44c während des Pulses I mit einer negativen Flanke beaufschlagt wird, erhält man zum Puls I kein Signal, zum Puls II wird die gekoppelte Elektrode 44b mit der positiven Flanke beaufschlagt, so dass sich ein positives Signal ergibt. Zum Puls III wird wiederum die Elektrode 44c mit der positiven Flanke beaufschlagt, weshalb auch hier ein positives Signal erhalten wird. Zum Puls IV wird die Elektrode 44 b schließlich mit einer negativen Flanke beaufschlagt, so dass sich hier ebenfalls kein Signal ergibt. Ersichtlich erhält man also auch hier unterschiedliche Signale. Entsprechendes gilt in den Fällen C und D.

Abschließend bleibt darauf hinzuweisen, dass die beschriebenen Ansteuerbeispiele nur exemplarisch sind. Selbstverständlich besteht die Möglichkeit, die Abläufe und Signale auch mit umgekehrter Polarität der Ansteuer- und entsprechend der Detektidnssignale zu realisieren.

## Patentansprüche

1. Anordnung zum Detektieren einer Rotation eines Drehelements, umfassend:
- eine auf einer im Wesentlichen planen Fläche des Drehelements (1) vorgesehene elektrisch leitende Teilfläche (2),
- ein feststehendes Sensorelement (7) mit einer ebenflächigen zentralen Empfängerelektrode (38) und vier um jeweils 90° versetzt symmetrisch um die Empfängerelektrode (38) angeordnete ebenflächige Anregungselektroden (39a, 39b, 39c, 39d), die zeitversetzt mit Spannungspulsen (I, II, III, IV) beaufschlagbar sind, welche Elektroden der elektrisch leitfähigen Teilfläche (2) beabstandet gegenüber stehen und die bei Rotation des Drehelements (1) über die elektrisch leitende Teilfläche (2) kapazitiv koppelbar sind, wobei die Teilfläche (41) derart bemessen ist, dass zwei benachbarte Anregungselektorden (39a, 39b, 39c, 39d) vollständig überdeckbar sind,
- Detektionsmittel (7, 45) zum Beaufschlagen der Anregungselektrode (39a, 39b, 39c, 39d) mit Spannungspulsen, zum Abgreifen von Empfängersignalen an der Empfängerelektrode (4, 38), und zum Ermitteln der Position des Drehelements (1, 40) bezüglich des Sensorelements (7) anhand der Empfängersignale, wobei
zu jeder der vier symmetrisch angeordneten Anregungselektroden (39a, 39b, 39c, 39d) stets die der mit dem anregenden Spannungspuls zu beaufschlagenden Anregungselektrode (39a, 39b, 39c, 39d) gegenüberliegende Anregungselektrode (39c, 39d, 39a, 39b) eine Kompensationselektrode bildet, die über die Detektionsmittel (7, 45) mit einem invertierten Spannungspuls zeitgleich beaufschlagbar ist, und wobei
die Frequenz der Spannungspulse im Falle einer Detektion ohne Drehrichtungserkennung wenigstens der doppelten, vorzugsweise der vierfachen maximalen Umdrehungsfrequenz des Drehelements (1, 40), und im Falle einer Detektion mit Drehrichtungserkennung über die Detektionsmittel wenigstens der vierfachen, vorzugsweise der sechs- bis achtfachen maximalen Umdrehungsfrequenz des Drehelements (1, 40) entspricht, wobei die Detektionsmittel (45) zur Ermittlung einer Drehung beziehungsweise der Drehrichtung anhand der ermittelbaren Polarität der an der Empfängerelektrode (38) abgreifbaren Signale ausgebildet sind.

2. Anordnung nach Anspruch 1, **dadurch gekennzeichnet, dass** die Empfängerelektrode (38) kreisförmig ist.

3. Anordnung nach Anspruch 2, **dadurch gekennzeichnet, dass** der Durchmesser der Empfängerelektrode (38) das 0,4 - bis 0,8-fache des Durchmessers der halbkreisförmig ausgebildeten Teilfläche (41) beträgt.

4. Anordnung nach einem der vorangehenden Ansprüche, **dadurch gekennzeichnet, dass** die Anregungselektroden (39a, 39b, 39c, 39d) als sich um einen Winkel zwischen 45° bis 90° erstreckende Kreisringsegmente augebildet sind.

5. Anordnung nach einem der vorangehenden Ansprüche, **dadurch gekennzeichnet, dass** an der vorzugsweise halbkreisförmigen Teilfläche (41) eine an der geradlinigen Flächenkante abstehende weitere Teilfläche (42) angeordnet ist, welche die zentrale Empfängerelektrode (38) zumindest teilweise überdeckt.

6. Anordnung nach einem der vorangehenden Ansprüche, **dadurch gekennzeichnet, dass** die aus der Kompensationselektrode (11) und der Empfängerelektrode (4) gebildete Kapazität im wesentlichen gleich der oder größer als die aus der Empfängerelektrode (4) und einer benachbarten Anregungselektrode (3a, 3b) gebildete Kapazität ist.

7. Anordnung nach einem der vorangehenden Ansprüche, **dadurch gekennzeichnet, dass** seitens der Detektionsmittel (45) innerhalb der minimalen Umdrehungszeit der Teilfläche (41, 42) eine Anregungselektrode (39a, 39b, 39c, 39d) und deren gegenüberliegende als Kompensationselektrode dienende Anregungselektrode (39c, 39d, 39a, 39b) mit Spannungspulsen (I, II) beaufschlagbar sind, wobei dies innerhalb der minimalen Umdrehungszeit wenigstens zweimal erfolgen kann.

8. Anordnung nach Anspruch 7, **dadurch gekennzeichnet, dass** seitens der Detektionsmittel (45) eine erste Anregungselektrode sowie deren zugeordnete Kompensationselektrode mit Spannungspulsen und anschließend eine zweite benachbarte Anregungselektrode sowie deren zugeordnete Kompensationselektrode mit Spannungspulsen beaufschlagbar sind, wobei dies innerhalb der minimalen Umdrehungszeit der Teilfläche wenigstens viermal erfolgen kann.

9. Anordnung nach Anspruch 8, **dadurch gekennzeichnet, dass** die Detektionsmittel (45) zur Richtungsermittlung nach der Methode der Quadratur-Richtungserkennung ausgebildet ist.

10. Anordnung nach Anspruch 8 oder 9, **dadurch gekennzeichnet, dass** die Detektionsmittel (45) derart ausgebildet sind, dass innerhalb der minimalen Umdrehungszeit der Teilfläche sequentiell alle vier Anregungselektroden (39a, 39b, 39c, 39d) und deren jeweils gegenüberliegende als Kompensationselektroden dienenden Anregungselektroden (39c, 39d, 39a, 39b) mit Spannungspulsen (I, II, III, IV) beaufschlagbar sind, wobei die Detektionsmittel (45) zum Ermitteln der Polarität der an der Empfängerelektrode (38) abgreifbaren Signale ausgebildet ist, und dass seitens der Detektionsmittel (38) ein Signal erzeugt wird, wenn alle vier Polaritäten gleich sind.

11. Anordnung nach einem der vorangehenden Ansprüche, **dadurch gekennzeichnet, dass** die Elektroden (38, 39a, 39b, 39c, 39d) auf einer mit einer Rückseitenmetallisierung (6) versehenen Leiterplatte (5) ausgebildet sind.

12. Anordnung nach einem der vorangehenden Ansprüche, **dadurch gekennzeichnet, dass** sie Teil eines Volumenmessgeräts ist.

13. Volumenmessgerät zum Messen des Volumens eines durch dieses strömenden Mediums, insbesondere Wasserzähler, mit einem vom Medium in Rotation versetzbaren Drehteil, insbesondere einem Flügelrad (17), sowie einer Anordnung nach einem der Ansprüche 1 bis 13, wobei das Drehelement mit dem Drehteil, insbesondere dem Flügelrad (17) bewegungsgekoppelt ist.

14. Volumenmessgerät nach Anspruch 13, **dadurch gekennzeichnet, dass** ein mechanisches Zählwerk (21), welches über ein Zählwerkgetriebe mit dem Drehteil, insbesondere dem Flügelrad (17) bewegungsgekoppelt ist, vorgesehen ist, wobei das Drehelement mit dem Zählwerk (21) oder dem Zählwerkgetriebe bewegungsgekoppelt ist.

15. Volumenmessgerät nach Anspruch 14, **dadurch gekennzeichnet, dass** das Drehelement über ein eigenes Untersetzungsgetriebe mit dem Zählwerkgetriebe bewegungsgekoppelt ist.

16. Volumenmessgerät nach Anspruch 14, **dadurch gekennzeichnet, dass** das Drehelement eine Rolle (23) des als Rollenzählwerk (21) ausgebildeten Zählwerks ist, wobei die elektrisch leitende Teilfläche (24) an einer Seitenfläche (22) der Rolle (23) vorgesehen ist.

17. Volumenmessgerät nach Anspruch 14 oder 15, **dadurch gekennzeichnet, dass** das Drehelement ein Zeiger (32a) des Zählwerks ist, an dessen Oberseite die elektrisch leitende Teilfläche (37) vorgesehen ist, und über dem sich eine Zählwerksabdeckung (33) befindet, wobei das Sensorelement (35) und das Detektionsmittel an der gegenüberliegenden Seite der Zählwerksabdeckung (37) vorgesehen sind.

18. Volumenmessgerät nach Anspruch 17, **dadurch gekennzeichnet, dass** das Sensorelement (35) und das Detektionsmittel in einer lösbar anbringbaren Einheit (34) integriert sind.

19. Volumenmessgerätesystem, umfassend ein Volumenmessgerät zum Messen des Volumens eines durch dieses strömenden Mediums, insbesondere Wasserzähler, mit einem vom Medium in Rotation versetzbaren Drehteil, insbesondere einem Flügelrad, sowie einem mechanischen Zählwerk mit wenigstens einem Drehelement in Form eines Zeigers (32a), der mit dem Drehteil bewegungsgekoppelt ist und an dessen Oberseite eine elektrisch leitende Teilfläche (37) vorgesehen ist, und der über eine Zählwerksabdeckung (33) nach außen hin gekapselt ist, sowie einer am Volumenmessgerät außenseitig lösbar, gegebenenfalls nachrüstbar anbringbarer Einheit (34) mit einem Sensorelement (35) und einen Detektionsmittel, wobei das Drehelement in Form des Zeigers (32a), das Sensorelement (35) und das Detektionsmittel eine Anordnung nach einem der Ansprüche 1 bis 12 bilden.

## Claims

1. Arrangement for detecting a rotation of a rotary element, comprising:
- an electrically conducting partial face (2) provided on a substantially plane face of the rotary element (1),
- a fixed sensor element (7) with a plane central receiver electrode (38) and four plane exciter electrodes (39a, 39b, 39c, 39d) which are disposed symmetrically spaced at 90° angles around the receiver electrode (38) and which may be actuated with a time lag by voltage impulses (I, II, III, IV), the electrodes of the electrically conductive partial face (2) being spaced apart and being capacitively couplable upon rotation of the rotary element (1) via the electrically conducting partial face (2), the partial face (41) being so dimensioned that two adjacent exciter electrodes (39a, 39b, 39c, 39d) may be fully covered,
- detection means (7, 45) for actuating the exciter electrode (39a, 39b, 39c, 39d) with voltage impulses, for measuring receiver signals at the receiver electrode (4, 38) and for determining the position of the rotary element (1, 40) relative to the sensor element (7) by means of the receiver signals, wherein
at each of the four symmetrically arranged exciter electrodes (39a, 39b, 39c, 39d), the exciter electrode (39a, 39b, 39c, 39d) opposite the exciter electrode (39a, 39b, 39c, 39d) to be acted on by the exciting voltage impulse always forms a compensation electrode, which may be acted on via the detection means (7, 45) with an inverted voltage impulse at the same time, and wherein the frequency of the voltage impulses in the case of detection without detection of the direction of rotation is at least twice, preferably four times the maximum revolution frequency of the rotary element (1, 40), and in the case of detection with detection of the direction of rotation via the detection means is at least four times, preferably six to eight times the maximum revolution frequency of the rotary element (1, 40), the detection means (45) being formed to determine a rotation or the direction of rotation by means of the detectable polarity of the signals detectable at the receiver electrode (38).

2. Arrangement according to claim 1, **characterised in that** the receiver electrode (38) is circular.

3. Arrangement according to claim 2, **characterised in that** the diameter of the receiver electrode (38) is 0.4 - 0.8 times the diameter of the semicircular partial face (41).

4. Arrangement according to one of the preceding claims, **characterised in that** the exciter electrodes (39a, 39b, 39c, 39d) are formed as circular annular segments extending about an angle of between 45° and 90°.

5. Arrangement according to one of the preceding claims, **characterised in that** on the preferably semicircular partial face (41) a further partial face (42) is disposed, which projects at the rectilinear face edge and which at least partially overlaps the central receiver electrode (38).

6. Arrangement according to one of the preceding claims, **characterised in that** the capacitance formed from the compensation electrode (11) and the receiver electrode (4) is substantially equal to or greater than the capacitance formed from the receiver electrode (4) and an adjacent exciter electrode (3a, 3b).

7. Arrangement according to one of the preceding claims, **characterised in that** on the part of the detection means (45), within the minimum revolution time of the partial face (41, 42) an exciter electrode (39a, 39b, 39c, 39d) and its opposing exciter electrode (39a, 39b, 39c, 39d) acting as a compensation electrode may be acted on with voltage impulses (I, II), which may take place at least twice within the minimum revolution time.

8. Arrangement according to claim 7, **characterised in that** on the part of the detection means (45) a first exciter electrode and its associated compensation electrode may be acted on with voltage impulses and then a second adjacent exciter electrode an its associated compensation electrode may be acted on with voltage impulses, which may take place at least four times within the minimum revolution time of the partial face.

9. Arrangement according to claim 8, **characterised in that** the detection means (45) is formed for detecting direction according to the method of quadrature direction detection.

10. Arrangement according to claim 8 or 9, **characterised in that** the detection means (45) are so formed that within the minimum revolution time of the partial face all four exciter electrodes (39a, 39b, 39c, 39d) and their respectively opposing exciter electrodes (39a, 39b, 39c, 39d) acting as compensation electrodes may be acted on sequentially by voltage impulses (I, II, III, IV), the detection means (45) being formed to determine the polarity of the signals measurable at the receiver electrode (38), and **in that** on the part of the detection means (38) a signal is generated when all four polarities are equal.

11. Arrangement according to one of the preceding claims, **characterised in that** the electrodes (38, 39a, 39b, 39c, 39d) are formed on a printed circuit board (5) provided with metallisation (6) on the reverse side.

12. Arrangement according to one of the preceding claims, **characterised in that** it is part of a volumetric device.

13. Volumetric device for measuring the volume of a medium flowing therethrough, in particular water meter, having a rotary part in, particular an impeller (17), which may be set in rotation by the medium, and a device according to one of claims 1 to 13, wherein the rotation element is coupled in motion to the rotary part, in particular the impeller (17).

14. Volumetric device according to claim 13, **characterised in that** a mechanical counter (21) is provided, which is coupled in motion via a counter gear to the rotary part, in particular the impeller (17), wherein the rotary element is coupled in motion to the counter (21) or the counter gear.

15. Volumetric device according to claim 14, **characterised in that** the rotary element is coupled in motion to the counter gear via its own reduction gear.

16. Volumetric device according to claim 14, **characterised in that** the rotary element is a roller (23) of the counter formed as a roller-type counter (21), wherein the electrically conducting partial face (24) is provided on a lateral face (22) of the roller (23).

17. Volumetric device according to claim 14 or 15, **characterised in that** the rotary element is a pointer (32a) of the counter, on whose upper face the electrically conducting partial face (37) is provided, and over which a counter cover (33) is located, wherein the sensor element (35) and the detection means are provided on the opposite side of the counter cover (37).

18. Volumetric device according to claim 17, **characterised in that** the sensor element (35) and the detection means are incorporated in a detachably mountable unit.

19. Volumetric device system, comprising a volumetric device for measuring the volume of a medium flowing therethrough, in particular water meter, having a rotary part, in particular impeller, which may be set in rotation by the medium, and having a mechanical counter with at least one rotary element in the form of a pointer (32a), which is coupled in motion to the rotary part and which is provided on its upper face with an electrically conducting partial face (37), and which is encapsulated on the outside via a counter cover (33), the system also having a unit (34) which may be mounted detachably on the exterior of the volumetric device, by retrofitting if necessary, the unit comprising a sensor element (35) and a detection means, wherein the rotary element in the form of the pointer (32a), the sensor element (35) and the detection means form an arrangement according to one of claims 1 to 12.

## Revendications

1. Dispositif de détection d'une rotation d'un élément rotatif, comprenant
- une surface partielle (2) électroconductrice prévue sur une surface sensiblement plane de l'élément rotatif (1),
- un élément capteur (7) fixe avec une électrode de réception centrale (38) et quatre électrodes d'excitation (39a, 39b, 39c, 39d) planes, décalées respectivement de 90° et agencées symétriquement autour de l'électrode de réception (38), lesquelles sont sollicitées de manière décalée dans le temps par des impulsions de tension (I, II, III, IV), lesquelles électrodes sont situées à distance de la surface partielle (2) électroconductrice et peuvent être amenées en couplage capacitif lors de la rotation de l'élément rotatif (1) au-dessus de la surface partielle (2) électroconductrice, la surface partielle (41) étant dimensionnée de telle sorte que deux électrodes d'excitation (39a, 39b, 39c, 39d) sont intégralement recouvertes,
- des moyens de détection (7, 45) destinés à solliciter les électrodes d'excitation (39a, 39b, 39c, 39d) par des impulsions de tension, destinés à prélever les signaux de réception sur l'électrode de réception (4, 38) et destinés à déterminer la position de l'élément rotatif (1, 40) par rapport à l'élément capteur (7) à partir des signaux de réception, sachant que
parmi chacune des quatre électrodes d'excitation (39a, 39b, 39c, 39d) disposées symétriquement, toujours l'électrode d'excitation (39a, 39b, 39c, 39d) en face de l'électrode d'excitation (39a, 39b, 39c, 39d) à solliciter par l'impulsion de tension d'excitation forme une électrode de compensation qui, par l'intermédiaire du moyen de détection (7, 45), peut être sollicitée simultanément par une impulsion de tension inversée, et sachant que
la fréquence des impulsions de tension, dans le cas d'une détection sans identification du sens de rotation, est égale à au moins deux fois, de préférence quatre fois, la fréquence de rotation maximale de l'élément rotatif (1, 40) et, en cas d'une détection avec identification du sens de rotation par l'intermédiaire du moyen de détection, est égale à au moins quatre fois, de préférence six à huit fois, la fréquence de rotation maximale de l'élément rotatif (1, 40), les moyens de détection (45) étant conçus pour déterminer une rotation ou le sens de rotation à partir de la polarité déterminée des signaux prélevés sur l'électrode de réception (38).

2. Dispositif selon la revendication 1, **caractérisé en ce que** l'électrode de réception (38) est circulaire.

3. Dispositif selon la revendication 2, **caractérisé en ce que** le diamètre de l'électrode de réception (38) correspond à 0,4 à 0,8 fois le diamètre de la surface partielle (41) semi-circulaire.

4. Dispositif selon l'une quelconque des revendications précédentes, **caractérisé en ce que** les électrodes d'excitation (39a, 39b, 39c, 39d) sont conçues sous forme de segments de cercle qui couvrent un angle entre 45° à 90°.

5. Dispositif selon l'une quelconque des revendications précédentes, **caractérisé en ce que**, sur la surface partielle (41), de préférence semi-circulaire, est agencée une autre surface partielle (42) en saillie sur le bord rectiligne, laquelle couvre au moins en partie l'électrode de réception centrale (38).

6. Dispositif selon l'une quelconque des revendications précédentes, **caractérisé en ce que** la capacité formée par l'électrode de compensation (11) et l'électrode de réception (4) est sensiblement égale ou supérieure à la capacité formée par l'électrode de réception (4) et une électrode d'excitation (3a, 3b) adjacente.

7. Dispositif selon l'une quelconque des revendications précédentes, **caractérisé en ce que**, pendant le temps de rotation minimum de la surface partielle (41, 42), une électrode d'excitation (39a, 39b, 39c, 39d) et l'électrode d'excitation (39a, 39b, 39c, 39d) qui lui fait face et fait fonction d'électrode de compensation sont sollicitées par des impulsions de tension (I, II) par l'intermédiaire du moyen de détection (45), cela pouvant se produire au moins deux fois pendant le temps de rotation minimum.

8. Dispositif selon la revendication 7, **caractérisé en ce que** le moyen de détection (45) applique des impulsions de tension sur une première électrode d'excitation, ainsi que sur l'électrode de compensation qui lui est associée et applique ensuite des impulsions de tension sur une deuxième électrode d'excitation adjacente, ainsi que sur l'électrode de compensation associée à celle-ci, cela pouvant être effectué au moins quatre fois pendant le temps de rotation minimum de la surface partielle.

9. Dispositif selon la revendication 8, **caractérisé en ce que** le moyen de détection (45) est conçu pour déterminer la direction selon la méthode d'identification de la direction de la quadrature.

10. Dispositif selon la revendication 8 ou 9, **caractérisé en ce que** les moyens de détection (45) sont conçus de telle sorte que, pendant le temps de rotation minimum de la surface partielle, les quatre électrodes d'excitation (39a, 39b, 39c, 39d) et les électrodes d'excitation (39a, 39b, 39c, 39d) qui leur font face et font fonction d'électrodes de compensation peuvent être sollicitées séquentiellement par des impulsions de tension (I, II, III, IV), les moyens de détection (45) étant conçus pour déterminer la polarité des signaux prélevés sur l'électrode de réception (38), et **en ce qu'**un signal est généré du côté des moyens de détection lorsque les quatre polarités sont identiques.

11. Dispositif selon l'une quelconque des revendications précédentes, **caractérisé en ce que** les électrodes (38, 39a, 39b, 39c, 39d) sont réalisées sur une plaquette conductrice (5) avec une métallisation (6) de la face arrière.

12. Dispositif selon l'une quelconque des revendications précédentes, **caractérisé en ce qu'**il fait partie d'un compteur volumétrique.

13. Compteur volumétrique destiné à mesurer le volume d'un fluide circulant à travers celui-ci, en particulier un compteur d'eau, comprenant une pièce rotative pouvant être entraînée en rotation par le fluide, en particulier une roue hélice (17), ainsi qu'un dispositif selon l'une quelconque des revendications 1 à 13, l'élément rotatif étant couplé en mouvement avec la pièce rotative, en particulier la roue hélice (17).

14. Compteur volumétrique selon la revendication 13, **caractérisé en ce qu'**il est prévu un compteur mécanique (21), qui est couplé en mouvement par l'intermédiaire d'un engrenage avec la pièce rotative, en particulier la roue hélice (17), l'élément rotatif étant couplé en mouvement avec le compteur (21) ou l'engrenage du compteur.

15. Compteur volumétrique selon la revendication 14, **caractérisé en ce que** l'élément rotatif est couplé en mouvement avec l'engrenage du compteur par l'intermédiaire d'un démultiplicateur qui lui est propre.

16. Compteur volumétrique selon la revendication 14, **caractérisé en ce que** l'élément rotatif est un rouleau (23) du compteur conçu sous forme de compteur à rouleaux (21), la surface partielle (24) électroconductrice étant prévue sur une surface latérale (22) du rouleau (23).

17. Compteur volumétrique selon la revendication 14 ou 15, **caractérisé en ce que** l'élément rotatif est une aiguille (32a) du compteur, sur la face supérieure de laquelle est prévue la surface partielle (37) électroconductrice et au-dessus de laquelle est disposé le couvercle (33) du compteur, l'élément capteur (35) et l'élément de détection étant prévus sur la face opposée du couvercle (33) du compteur.

18. Compteur volumétrique selon la revendication 17, **caractérisé en ce que** l'élément capteur (35) et le moyen de détection sont intégrés dans une unité (34) à montage amovible.

19. Système de compteur volumétrique comprenant un compteur volumétrique destiné à mesurer le volume d'un fluide circulant à travers celui-ci, en particulier un compteur d'eau, comprenant une pièce rotative pouvant être entraînée en rotation par le fluide, en particulier une roue hélice, ainsi qu'un compteur mécanique avec au moins un élément rotatif en forme d'aiguille (32a), qui est couplé en mouvement avec la pièce rotative et sur la surface duquel est prévue la surface partielle (37) électroconductrice, et qui est fermé vers l'extérieur au moyen d'un couvercle de compteur (33), ainsi qu'une unité (34), munie d'un élément capteur (35) et d'un moyen de détection et destinée à être posée de manière amovible et pouvant le cas échéant être rééquipée, l'élément de rotation étant conçu sous forme d'aiguille (32a), l'élément capteur (35) et le moyen de détection formant un dispositif selon l'une quelconque des revendications 1 à 12.
